Europäisches Patentamt

European Patent Office

Office européen des brevets

(11) Veröffentlichungsnummer: **0 150 071**
**B1**

(12) **EUROPÄISCHE PATENTSCHRIFT**

(45) Veröffentlichungstag der Patentschrift:
09.12.87

(51) Int. Cl.⁴: **B 01 J 2/12**, F 26 B 11/04

(21) Anmeldenummer: **85100587.6**

(22) Anmeldetag: **21.01.85**

(54) **Selbstreinigende Drehtrommel.**

(30) Priorität: **21.01.84 DE 3402059**

(43) Veröffentlichungstag der Anmeldung:
**31.07.85 Patentblatt 85/31**

(45) Bekanntmachung des Hinweises auf die Patenterteilung:
**09.12.87 Patentblatt 87/50**

(84) Benannte Vertragsstaaten:
**AT CH DE FR GB IT LI**

(56) Entgegenhaltungen:
**LU - A - 31 484**
**US - A - 2 812 541**

(73) Patentinhaber: **SKW Trostberg Aktiengesellschaft,
Dr.-Albert-Frank-Strasse 32 Postfach 1150/1160,
D-8223 Trostberg (DE)**

(72) Erfinder: **Riederer, Emil, Pechlerau 1a, D-8223 Trostberg
(DE)**
Erfinder: **Zahn, Karl-Ludwig,
Dr.-Albert-Frank-Strasse 47, D-8223 Trostberg (DE)**
Erfinder: **Bencker, Rudolf, Herzog-Otto-Strasse 35,
D-8223 Trostberg (DE)**

(74) Vertreter: **Weickmann, Heinrich, Dipl.-Ing. et al,
Patentanwälte Dipl.-Ing. H.Weickmann Dipl.-Phys.Dr.
K.Fincke Dipl.-Ing. F.A.Weickmann Dipl.-Chem. B. Huber
Dr.-Ing. H. Liska Dipl.-Phys.Dr. J. Prechtel
Postfach 860820, D-8000 München 86 (DE)**

## Beschreibung

Die Erfindung betrifft eine Drehtrommel mit einer horizontalen oder gegen die Horizontale schwach geneigten Drehachse, mit mindestens zwei das Anbacken von Gut vermeidenden beweglichen Grundbahnen aus elastischem Material, die nebeneinander an der Innenseite der Drehtrommel als Auskleidung angeordnet sind.

Es wurden bereits vielfältige Anstrengungen unternommen, um Anbackungen oder Krustenbildungen in Drehtrommeln zu vermeiden. Insbesondere wurden Auskleidungen vorgeschlagen, deren Palette von hochglanzpoliertem Stahl, über spezielle Keramiksorten bis zu unterschiedlichen Kunststoffbelägen reichten. Darüber hinaus wurden Einbauten, wie Abstreifer, Ketten oder Hämmer vorgeschlagen, die die Innenseite der Trommel von Anbackungen reinhalten sollten.

In der DE-AS 2 053 235 wurde bereits eine Drehtrommel beschrieben, deren Innenfläche mit Längsstreifen aus Gummi bedeckt ist, die bei der Bewegung der Trommel in der oberen Lage durchhängen, so dass die auf ihnen entstandene Kruste abgelöst wird.

Solche Längstreifen sind in nur relativ kleinen Drehtrommeln einsetzbar, da diese infolge des Eigengewichts des Materials zu hohem Verschleiss ausgesetzt sind.

Der Erfindung liegt daher die Aufgabe zugrunde, eine in grosstechnischem Massstab einsetzbare Drehtrommel zu schaffen, in der keine Anbackungen des bewegten Materials möglich sind bzw. weitgehend vermieden werden.

Die Aufgabe wird erfindungsgemäss dadurch gelöst dass die Grundbahnen an ihren axial einander zugewandten Randbereichen in radialem Abstand von der Innenseite der Drehtrommel befestigt sind und dass jeweils eine Überlappungsbahn die einander axial zugewandten Randbereiche der Grundbahnen überdeckt, wobei die Überlappungsbahn mit jeweils einer ihrer in Achsrichtung der Drehtrommel beabstandeten Kanten auf jeweils einer der Grundbahnen befestigt ist.

Auf die Innenwand des Stahlmantels der Drehtrommel werden durch Verbindungselemente wie z.B. Nieten, Schrauben oder durch Kleben Distanzstreifen angebracht. Da auf diesen Distanzstreifen die beweglichen Grundbahnen aus elastischem Material fest haften müssen, wird hierfür zweckmässigerweise ein ähnliches Material verwendet wie für die Grundbahnen selbst. Durch die Elastizität der Grundbahnen, wofür beispielsweise Polyvinylchlorid, Nylon, Polyethylen in verschiedenen Einstellungen, Gummi, Kautschuk, Chloropren, mit und ohne Gewebeeinlagen verwendet werden kann, werden diese bei Belastung gespannt und bei Entlastung, wenn sich die Trommel entsprechend weiter gedreht hat, gelockert, wodurch ggf. anbackende Stoffe u.a. durch den Walkeffekt abfallen.

Damit die Grundbahnen eine entsprechende Beweglichkeit erhalten, ist deren freie Länge vorzugsweise etwas grösser als der Abstand zwischen den Distanzstreifen. Natürlich genügt für viele Fälle ein lockeres Einkleben dieser Grundbahnen; bevorzugt wird jedoch ein Verhältnis des Abstandes zwischen den Distanzstreifen zur frei beweglichen axialen Länge dieser Grundbahnen von mindestens 1:1,1. Bei besonders schwierig zu handhabenden Produkten können die Grundbahnen derart in der Drehtrommel angebracht werden, dass sie im entlasteten Zustand etwa bis zur Längsachse der Drehtrommel durchhängen.

Dünger auf Basis von Kalkstickstoff würden sich trotzdem noch an den Stellen festsetzen, an denen die Grundbahnen aus elastischem Material auf dem Distanzstreifen befestigt sind. Hierbei können «Produktringe» entstehen, die den Materialfluss beträchtlich behindern und ggf. zu weiteren Anbackungen Anlass geben könnten.

Die Lösung dieses Problems bieten die Überlappungsbahnen, die zu beiden Seiten der Distanzstreifen auf die darunterliegenden Grundbahnen aufgeklebt sind. Dadurch bewegen sich auch diese entsprechend der Belastung durch das die Drehtrommel durchwandernde Produkt und überbrücken damit die unbeweglichen Befestigungsstellen der Grundbahnen auf den Distanzstreifen.

Die Überlappungsbahnen überdecken die radial angebrachten Bahnen vom Distanzstreifen ab gerechnet, jeweils um 1/10 bis 1/3 ihrer Länge. Welche Abmessungen hierbei im einzelnen gewählt werden, hängt sowohl vom zu behandelnden Produkt als auch von der erforderlichen Materialart der Auskleidung ab.

Dadurch, dass die Kanten der Überlappungsbahnen an den Seiten abgeschrägt sind, wird der Produktfluss gefördert und eine zu schnelle mechanische Abnützung der Befestigungsstelle vermieden.

Die Dicke der Distanzstreifen liegt zwischen 10 bis 30 mm. Deren Anbringung an der Trommelinnenseite erfolgt durch Schrauben oder Nieten, vorzugsweise durch Aufkleben mit geeigneten Klebstoffen.

Die Stärke des elastischen Materials hängt von dessen physikalischen Eigenschaften, insbesondere seiner Flexibilität oder auch von der Grösse der überklebten Flächen ab. Im allgemeinen sind jedoch Stärken von 4 bis 12 mm ausreichend. Die Überlappungsbahnen bestehen bevorzugt aus dem gleichen Material wie die auf den Distanzstreifen befestigten Grundbahnen, haben aber nur eine Dicke von vorzugsweise 2 bis 10 mm.

Infolge der Belastung durch das die Drehtrommel durchwandernde Produkt werden die Bahnen aus elastischem Material ständig verformt (gewalkt) und schliesslich vollständig entlastet, wenn sich der betreffende Abschnitt in der oberen Hälfte befindet. In diesem Teil erfolgt durch das Umschlagen der elastischen Bahn ein Abwurf evtl. angesetzten Produktes, so dass die Bahnoberfläche vollständig abgereinigt wieder in die Schüttung des Produktbettes eintaucht.

Gleichzeitig mit den Grundbahnen werden auch die Überlappungsbahnen im unteren Teil durch das Produkt an die Trommelinnenseite angepresst und im oberen Teil entlastet, wodurch evtl. angesetztes Produkt abgeworden wird und die Überlappungsbahn in den Innenraum der Drehtrommel umschlägt.

Bei einer Granuliertrommel von 16 m Länge und 2 m Durchmesser kann in der vorbeschriebenen Weise der gesamte Innenraum ausgekleidet werden, so dass Anbackungen im Betrieb nicht oder nur in sehr geringem Umfang beobachtet werden. Bei einer Drehtrommel derartiger Abmessungen werden die Distanzstreifen von 8 bis 12 mm Stärke und 20 bis 50 mm axialer Breite in Abständen von 1600 bis 1800 mm in die Trommelinnenwand eingeklebt und hierauf Grundbahnen aus 5 bis 7 mm starkem elastischem Material radial aufgeklebt. Die Überlappungsbahn mit einer Bereite von etwa 800 bis 1300 mm und einer Stärke von etwa 4 mm wird auf das elastische Material durch Kleben befestigt. Die Klebeflächen sollten jeweils 100 bis 300 mm an jeder Seite betragen. Um die axial wirkenden Scherkräfte durch den Produktfluss möglichst gering zu halten, werden die Kanten der Überlappungsbahn unter einem Winkel von 10 bis 60° angeschrägt.

Andere Abmessungen der Drehtrommel, anderes Auskleidungsmaterial oder anderes in der Drehtrommel zu behandelndes Produkt beeinflussen die vorstehend angegebenen Abmessungen sowie auch die Art des Auskleidungsmaterials. Die erfindungsgemässe Ausstattung ist bei Drehtrommeln beliebiger Abmessungen möglich, auch konischen oder kugelförmigen Behältern. Durch einfache Versuche lassen sich die optimalen Abmessungen des elastischen Materials leicht finden.

Die auf diese Weise ausgekleideten Drehtrommeln werden insbesondere zum Pelletieren angefeuchteten Materials aber auch zum Mischen von pulverförmigen oder zum Anbacken neigender Stoffe verwendet.

Insbesondere können mit der erfindungsgemässen Drehtrommel feuchte Düngemittel und Abfallstäube pelletiert werden. Weiterhin ist es möglich, mit der erfindungsgemässen Drehtrommel Baustoffzusatzmittel zu mischen.

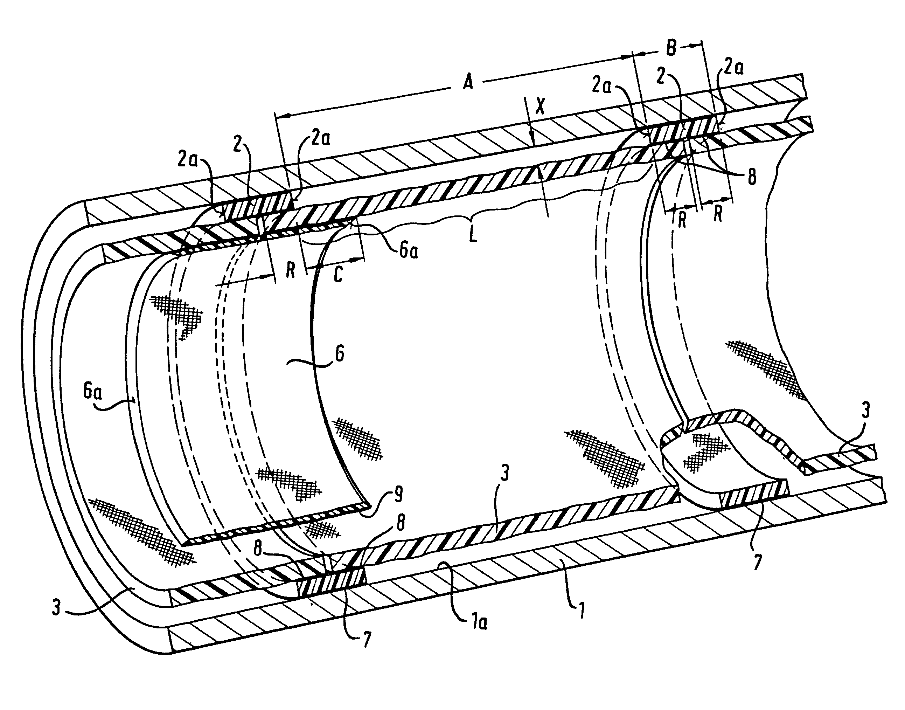

Ein Ausführungsbeispiel der erfindungsgemässen Drehtrommel ist in der Figur dargestellt. Die zylindrische Drehtrommel, deren Achse horizontal oder gegen die Horizontale leicht geneigt ist, ist mit 1 bezeichnet. Die Innenseite der Drehtrommel ist mit 1a bezeichnet. An der Innenseite der Drehtrommel sind ringförmige Distanzstreifen angebracht. Der lichte axiale Abstand aufeinanderfolgender Distanzstreifen 2 ist mit A bezeichnet, die axiale Breite der Distanzstreifen mit B. Die Distanzstreifen 2 sind mit der Innenseite 1a der Drehtrommel 1 verklebt.

An den Distanzstreifen 1 sind Grundbahnen 3 befestigt, und zwar weist jede Grundbahn 3 Randbereiche R auf, die sich mit den jeweils zugehörigen Distanzstreifen 2 überlappen und mit diesen verklebt sind. Die freie Länge der Grundbahnen 3 zwischen einander zugekehrten Kanten 2a ist mit L bezeichnet. Durch die gewellte Klammer bei L wird angedeutet, dass diese freie Länge, im entspannten Zustand der Grundbahn 3 gemessen, grösser ist als der Abstand zwischen den einander zugekehrten Kanten 2a der beiden Distanzstreifen 2; mit anderen Worten: die Grundbahn 3 zwischen den beiden einander zugekehrten Kanten 2a der beiden Distanzstreifen ist leicht gewellt.

Die im Bereich der Distanzstreifen 2 aneinander anschliessenden Grundbahnen 3 sind jeweils von einer Überlappungsbahn 6 überlappt, die einen geschlossenen Ring bildet. Diese Überlappungsbahn 6 ist in Achsrichtung der Drehtrommel breiter als die Distanzstreifen 2. Sie weist in axialer Richtung Überstände C über die jeweils zugehörige Kante des Distanzstreifens 2 auf. Die in axialer Richtung beabstandeten Kanten 6a der Überlappungsbahn 6 sind unter einem Winkel von beispielsweise 45° abgeschrägt, so dass die Innenseite der Überlappungsbahn 6 einigermassen glatt in die Innenseite der Grundbahnen 3 übergeht. Festzuhalten ist dabei, dass die Kanten 6a sich ausserhalb des Bereichs der Distanzstreifen 2 befinden, also in erheblichem Masse der Walkbewegung ausgesetzt sind.

Die Verklebung zwischen den Distanzstreifen 2 und der Innenseite 1a der Drehtrommel ist mit 7 bezeichnet. Sie erstreckt sich vorzugsweise über die ganze axiale Breite B der Distanzstreifen 2. Die Verklebungen der Grundbahnen 3 mit den Distanzstreifen 2 sind mit 8 bezeichnet. Sie erstrecken sich jeweils über die Randbereiche R.

Die Verklebung zwischen der Überlappungsbahn 6 und den Grundbahnen 3 ist mit 9 bezeichnet; sie erstreckt sich über die ganze Breite der Überlappungsbahn 6.

**Patentansprüche**

1. Drehtrommel mit einer horizontalen oder gegen die Horizontale schwach geneigten Drehachse, mindestens zwei das Anbacken von Gut vermeidenden beweglichen Grundbahnen (3) aus elastischem Material, die nebeneinander an der Innenseite (1a) der Drehtrommel (1) als Auskleidung angeordnet sind, dadurch gekennzeichnet, das die Grundbahnen (3) an ihren axial einander zugewandten Randbereichen (R) in radialem Abstand von der Innenseite der Drehtrommel (1) befestigt sind und dass jeweils eine Überlappungsbahn (6) die einander axial zugewandten Randbereiche (R) der Grundbahnen (3) überdeckt, wobei die Überlappungsbahn (6) mit jeweils einer ihrer in Achsrichtung der Drehtrommel (1) beabstandeten Kanten (6a) auf jeweils einer der Grundbahnen (3) befestigt ist.

2. Drehtrommel nach Anspruch 1, dadurch gekennzeichnet, dass die in Achsrichtung der Drehtrommel (1) beabstandeten Kanten (6a) einer Überlappungsbahn (6) abgeschrägt sind.

3. Drehtrommel nach einem der Ansprüche 1 und 2, dadurch gekennzeichnet, dass die Überlappungsbahn (6) aus dünnerem elastischen Material besteht als die Grundbahnen (3).

4. Drehtrommel nach einem der Ansprüche 1 bis 3, dadurch gekennzeichnet, dass die Grundbahnen (3) in ihren Randbereichen (R) an der Drehtrommel (1) unter Vermittlung von Distanzstreifen (2) befestigt sind.

5. Drehtrommel nach einem der Ansprüche 1 bis 4, dadurch gekennzeichnet, dass die Distanzstreifen (2) an der Innenseite der Drehtrommel (1) und/oder die Grundbahnen (3) an den Distanzstreifen (2) und/oder die Überlappungsbahn (6) an den Grundbahnen (3) durch Verkleben befestigt sind.

6. Drehtrommel nach einem der Ansprüche 4 und 5, dadurch gekennzeichnet, dass die in Achsrichtung der Drehtrommel (1) gemessene freie Länge (L) der Grundbahnen (3) zwischen einander zugekehrten Kanten (2a) benachbarter Distanzstreifen (2) gleich oder vorzugsweise grösser ist als der Abstand (A) dieser einander zugekehrten Kanten (2a).

7. Drehtrommel nach Anspruch 6, dadurch gekennzeichnet, dass die freie Länge (L) der Grundbahnen (3) zwischen einander zugekehrten Kanten (2a) benachbarter Distanzstreifen (2) mindestens das 1,1fache des axialen Abstands (A) dieser einander zugekehrten Kanten (2a) beträgt.

8. Drehtrommel nach einem der Ansprüche 4 bis 7, dadurch gekennzeichnet, dass die Überlappungsbahn (6) in Achsrichtung der Drehtrommel (1) über die Kanten (2a) des zugehörigen Distanzstreifens (2) hinausragende Überstände (C) besitzt.

9. Drehtrommel nach Anspruch 8, dadurch gekennzeichnet, dass die Überstände (C) der Überlappungsbahn (6) 1/10 bis 1/3 des axialen Abstands (A) der jeweils zugehörigen Distanzstreifen (2) betragen.

10. Drehtrommel nach einem der Ansprüche 1 bis 9, dadurch gekennzeichnet, dass der radiale Abstand (X) einer Grundbahn (3) von der Innenseite (1a) der Drehtrommel (1), zwischen den zugehörigen Randbereichen (R) gemessen, annähernd gleich dem radialen Abstand (Wandstärke der Distanzstreifen (2) in den Randbereichen (R) ist.

11. Drehtrommel nach einem der Ansprüche 1 bis 10, dadurch gekennzeichnet, dass die Grundbahn (3) zwischen den zugehörigen Randbereichen (R) im entlasteten Zustand unter Einwirkung der Schwerkraft in radialer Richtung zur Trommelachse hin auslenkbar ist.

## Claims

1. Rotary drum having an axis of rotation which is horizontal or slightly inclined in ralation to the horizontal, with at least two movable basic webs (3) of elastic material avoiding the accumulation of material, which are arranged side by side on the inside (1a) of the rotary drum (1) as lining, characterised in that the basic webs (3) are secured at their axially mutually facing marginal zones (R) with radial spacing from the inside of the rotary drum (1) and in that in each case an overlapping web (6) covers over the axially mutually facing marginal zones (R) of the basic webs (3), the overlapping web (6) being secured with one of its edges (6a) spaced in the axial direction of the rotary drum (1) on each one of the basic webs (3).

2. Rotary drum according to Claim 1, characterised in that the edges (6a), spaced in the axial direction of the rotary drum (1), of an overlapping web (6) are bevelled.

3. Rotary drum according to one of Claims 1 and 2, characterised in that the overlapping web (6) consists of thinner elastic material than the basic webs (3).

4. Rotary drum according to one of Claims 1 to 3, characterised in that the basic webs (3) are secured in their marginal zones (R) on the rotary drum (1) through the intermediary of distance strips (2).

5. Rotary drum according to one of Claims 1 to 4, characterised in that the distance strips (2) are secured on the inner side of the rotary drum (1) and/or the basic webs (3) are secured on the distance strips (2) and/or the overlapping web (6) is secured on the basic webs (3) in each case by adhesion.

6. Rotary drum according to one of Claims 4 and 5, characterised in that the free length (L) of the basic webs (3) between mutually facing edges (2a) of adjacent distance strips (2), measured in the axial direction of the rotary drum (1) is equal to or preferably greater than the interval (A) of these mutually facing edges (2a).

7. Rotary drum according to Claim 6, characterised in that the free length (L) of the basic webs (3) between mutually facing edges (2a) of adjacent distance strips (2) amounts at least to 1.1 times the axial interval (A) of these mutually facing edges (2a).

8. Rotary drum according to one of Claims 4 to 7, characterised in that the overlapping web (6) possesses in the axial direction of the rotary drum (1) overlapping parts (C) protruding beyond the edges (2a) of the pertinent distance strip (2).

9. Rotary drum according to Claim 8, characterised in that the overlapping parts (C) of the overlapping web (6) amount to 1/10 to 1/3 of the axial interval (A) of the pertinent distance strips (2) in each case.

10. Rotary drum according to one of Claims 1 to 9, characterised in that the radial interval (X) of a basic web (3) from the inner side (1a) of the rotary drum (1), measured between the pertinent marginal zones (R) is approximately equal to the radial interval (wall thickness of the distance strips (2) in the marginal zones (R).

1. Rotary drum according to one of Claims 1 to 10, characterised in that the basic web (3) in the unloaded condition is deflectable in the radial direction towards the drum axis under the action of gravity between the pertinent marginal zones (R).

## Revendications

1. Tambour rotatif avec un axe de rotation horizontal ou faiblement incliné par rapport à l'horizontale, avec au moins deux bandes de base mobiles (3) en matériau élastique, qui empêchent le produit traité de coller et sont disposées l'une à côté de l'autre en revêtement sur le côté intérieur (1a) du tambour rotatif (1), caractérisé en ce que les bandes de base (3) sont fixées sur leurs régions de bords (R) axialement en vis-à-vis à distance radiale du côté intérieur du tambour rotatif (1), et en ce qu'une bande de recouvrement (6) recouvre les régions de bords (R) axialement en vis-à-vis des bandes de base (3), la bande de recouvrement (6) étant respectivement fixée sur chacune des bandes de base (3) par à chaque fois un de ses bords (6a) distants dans le sens axial du tambour rotatif (1).

2. Tambour rotatif selon la revendication 1, caractérisé en ce que les bords (6a) distants dans le sens axial du tambour rotatif (1) d'une bande de recouvrement (6) sont biseautés.

3. Tambour rotatif selon une des revendications 1 et 2, charactérisé en ce que la bande de recouvrement (6) est constituée d'un matériau élastique plus mince que les bandes de base (3).

4. Tambour rotatif selon une des revendications 1 à 3, charactérisé en ce que les bandes de base (3) sont fixées dans leurs régions de bords (R) sur le tambour rotatif (1) par l'intermédiaire de bandes d'écartement (2).

5. Tambour rotatif selon une des revendications 1 à 4, charactérisé en ce que les bandes d'écartement (2) sont fixées sur le côté intérieur du tambour rotatif (1) par collage, et/ou les bandes de base (3) sont fixées sur les bandes d'écartement (2) par collage, et/ou la bande de recouvrement (6) est fixée sur les bandes de base (3) par collage.

6. Tambour rotatif selon une des revendications 4 et 5, charactérisé en ce que la longueur libre (L) des bandes de base (3), mesurée dans le sens axial du tambour rotatif (1), entre les bords en vis-à-vis (2a) de bandes d'écartement (2) voisines, est égale ou de préférence supérieure à la distance (A) entre ces bords en vis-à-vis (2a).

7. Tambour rotatif selon la revendication 6, charactérisé en ce que la longueur libre (L) des bandes de base (3) entre les bords en vis-à-vis (2a) de bandes d'écartement (2) voisines est au moins égale à 1,1 fois la distance axiale (A) entre ces bords en vis-à-vis (2a).

8. Tambour rotatif selon une des revendications 4 à 7, charactérisé en ce que la bande de recouvrement (6) présente, dans le sens axial du tambour rotatif, des extrémités en projection (C) allant au-delà des bords (2a) de la bande d'écartement (2) correspondante.

9. Tambour rotatif selon la revendication 8, charactérisé en ce que les extrémités en projection (C) de la bande de recouvrement (6) atteignent une longueur égale à 1/10 à 1/3 de la distance axiale (A) entre les bandes d'écartement (2) respectivement correspondantes.

1. Tambour rotatif selon une des revendications 1 à 9, charactérisé en ce que la distance radiale (X) entre une bande de base (3) et le côté intérieur (1a) du tambour rotatif (1), mesurée entre les régions de bords (R) concernées, est approximativement égale à la distance radiale (épaisseur de paroi des bandes d'écartement (2) dans les régions de bords (R).

11. Tambour rotatif selon une des revendications 1 à 10, caractérisé en ce que la bande de base (3) peut, à l'état non sollicité et sous l'action de la force centrifuge, être déviée radialement vers l'axe du tambour entre les régions de bords (R) concernées.